# EUROPEAN PATENT APPLICATION

(11) **EP 4 528 129 A1**
(43) Date of publication of application: **26.03.2025**
(21) Application number: 24202117.8
(22) Date of filing: 24.09.2024
(51) Int. Cl.: F16H 47/02, B60K 17/10, F16H 47/04, F16H 57/02

(54) **TRANSMISSION ASSEMBLY WITH TWO HYDRAULIC MOTORS FOR CONSTRUCTION MACHINES**

(30) Priority: 25.09.2023 IT 202300019689
(71) Applicant: Bonfiglioli S.p.A., 40012 Calderara di Reno (BO) (IT)
(72) Inventor: ALLEVI, Alessio, 40012 CALDERARA DI RENO (BO) (IT); NORO, Riccardo, 40012 CALDERARA DI RENO (BO) (IT); TORCELLI, Andrea, 40012 CALDERARA DI RENO (BO) (IT)
(74) Representative: Studio Torta S.p.A.

(57) **Abstract**

A transmission assembly with a double hydraulic motor for operating machines has two hydraulic motors (7, 8) provided with respective transmission shafts (9, 10), an output shaft (28) which can be connected to at least one driving wheel of an operating machine, a geared reduction unit (30) to connect the two transmission shafts (9, 10) and the output shaft (28) to one another, a coupling device (36) to connect the two transmission shafts (9, 10) to one another in a releasable manner, and one single box-shaped containing body (2) configured to accommodate, on the inside, the two hydraulic motors (7, 8), the output shaft (28), the geared reduction unit (30), and the coupling device (36) .

## Description

### CROSS REFERENCE TO RELATED APPLICATIONS

This patent application claims priority from Italian patent application no. 102023000019689 filed on September 25, 2023, the entire disclosure of which is incorporated herein by reference.

### TECHNICAL FIELD

The present invention relates to a transmission assembly with a double hydraulic motor for operating machines.

### BACKGROUND

The present invention finds particularly advantageous application in operating machines, such as construction machines, earth-moving machines and agricultural machines, to which the description below will make explicit reference, without loss of generality.

In the field of transmission assemblies with a double hydraulic motor for operating machines, it is known to provide a transmission assembly of the type comprising a first hydraulic motor, normally a swashplate hydraulic motor, provided with a first transmission shaft; a second hydraulic motor, normally a swashplate hydraulic motor, provided with a second transmission shaft; an output shaft which can be connected, generally, to an axle of an operating machine; a geared reduction unit to connect the first transmission shaft, the second transmission shaft, and the output shaft to one another; and a coupling device to connect the two transmission shafts to one another in a releasable manner.

Generally, the two hydraulic motors are swashplate hydraulic motors, and have respective motor bodies fixed to a box-shaped containing body of the geared reduction unit.

The coupling device normally comprises a clutch mounted on the second transmission shaft and operable to allow switching from a first gear, in which the two hydraulic motors are coupled to each other and to the output shaft to guarantee the operating machine a relatively low forward speed and a relatively high traction, to a second gear, in which one hydraulic motor is decoupled from the other hydraulic motor and from the output shaft to guarantee the operating machine a relatively high forward speed and a relatively low traction.

Known transmission assemblies with a double hydraulic motor for operating machines of the type described above have some drawbacks, mainly deriving from the fact that the assembly of the box-shaped containing body of the geared reduction unit and of the motor bodies of the two hydraulic motors has relatively large dimensions.

Moreover, as the coupling between the transmission shafts of the two hydraulic motors and the output shaft involves the interposition of a further transmission shaft, known transmission assemblies with a double hydraulic motor for operating machines of the type described above are relatively complex and costly.

### SUMMARY

The object of the present invention is to provide a transmission assembly with a double hydraulic motor for operating machines that is without the drawbacks described above and is simple and inexpensive to implement.

According to the present invention, there is provided a transmission assembly with a double hydraulic motor for operating machines as claimed in the appended claims.

### BRIEF DESCRIPTION OF THE DRAWINGS

The present invention will now be described with reference to the accompanying drawings, which illustrate a non-limiting embodiment thereof, wherein:
Figs. 1 and 2 are two schematic perspective views, with parts removed for clarity, of a preferred embodiment of the transmission assembly of the present invention;
Figs. 3, 4, 5, and 6 are four schematic section views, with parts removed for clarity, of the transmission assembly of Figs. 1 and 2;

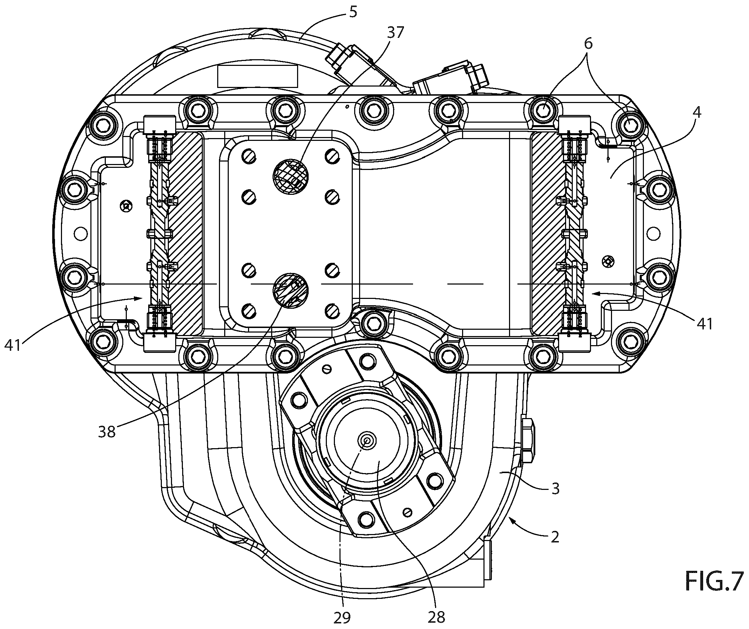

Figs. 7 and 8 are two schematic side views, with parts in section and parts removed for clarity, of the transmission assembly of Figs. 1 and 2; and

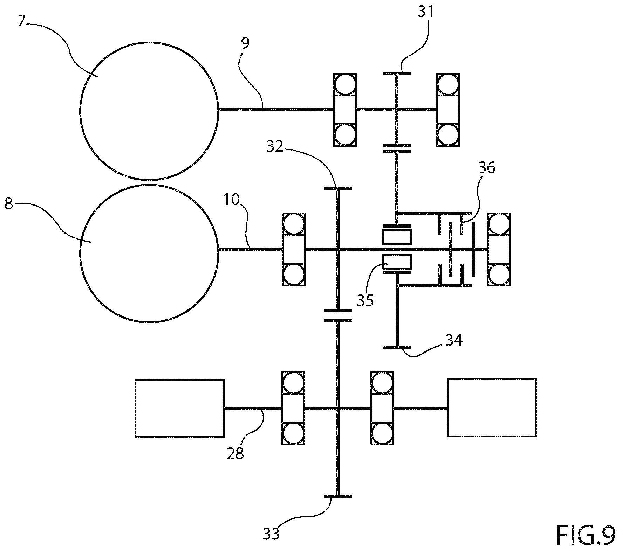

Fig. 9 schematically shows the operating principle of the transmission assembly of Fig. 1.

### DESCRIPTION OF EMBODIMENTS

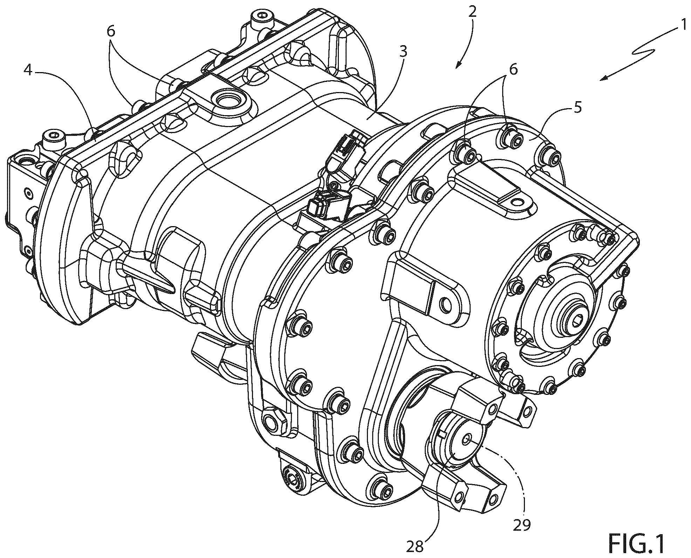

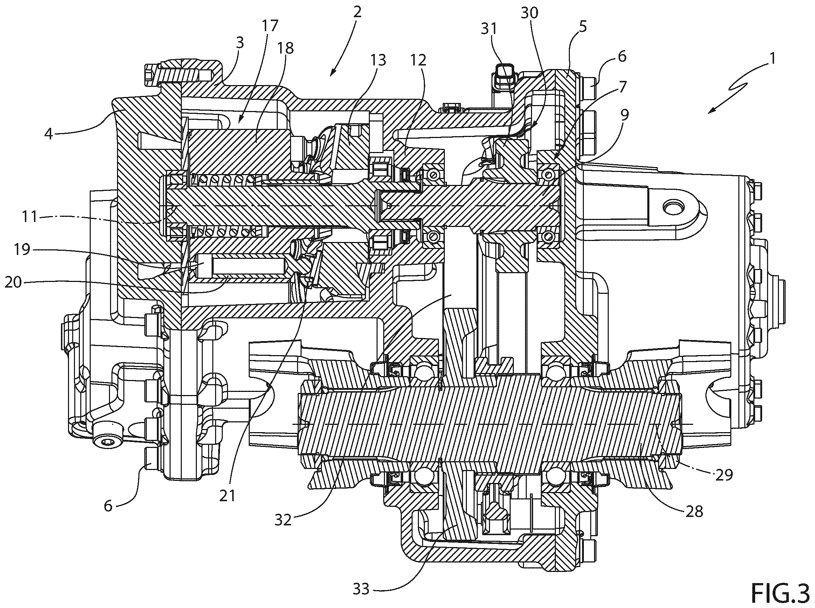

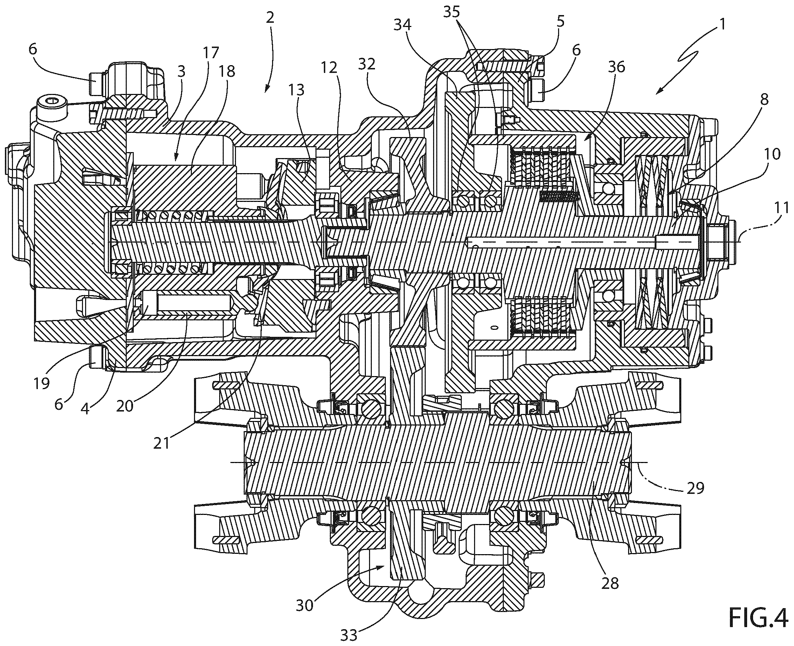

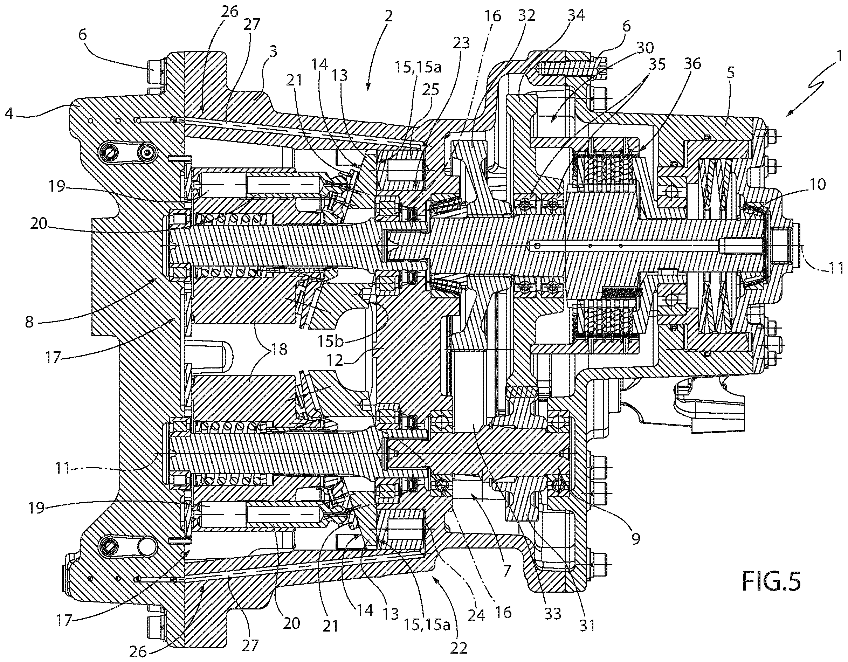

With reference to Figs. 1 to 5, the reference number 1 indicates, as a whole, a transmission assembly with a double hydraulic motor for operating machines (not illustrated), such as construction machines, earth-moving machines and agricultural machines.

The transmission assembly 1 comprises a box-shaped containing body comprising, in turn, a tubular central element 3 and two closing lids 4, 5 mounted on opposite ends of the element 3 and fixed to the element 3 through respective pluralities of fixing screws 6.

The body 2 accommodates, on the inside, two swashplate and continuously variable displacement hydraulic motors 7, 8 of the type described and shown in Italian patent application no. 102020000019477, fully incorporated herein by reference.

Each motor 7, 8 is provided with a transmission shaft 9, 10, which is mounted inside the body 2 so as to rotate around a rotation axis 11 parallel to the axis 11 of the other motor 7, 8, and extends through an intermediate flange 12 obtained inside the element 3 perpendicularly to the axes 11.

The motor 7, 8 further comprises an annular shaped countering plate 13, which extends around the relative shaft 9, 10, is engaged in a rotary manner by the relative shaft 9, 10, and is axially delimited by two faces 14, 15 opposite one another.

The face 14 is a substantially flat annular face inclined relative to the axis 11 at a variable angle other than 90°.

The face 15 faces the flange 12, and comprises two flat portions 15a, 15b connected to one another at an edge 16, which is crosswise to the axis 11, does not intersect the axis 11, and defines a rotation axis of the plate 13 relative to the body 2.

The plate 13 cooperates with a piston rotor 17 comprising a central hub 18, which is mounted on the shaft 9, 10 coaxially to the axis 11, is coupled in an angularly fixed manner to the shaft 9, 10, and has a plurality of guide cylinders 19, which are obtained in the hub 18 parallel to the axis 11, are evenly distributed around to the axis 11 and are axially open.

Each cylinder 19 is engaged in a sliding manner by a piston 20, a free end of which protrudes on the outside of the cylinder 19, and is provided with a shoe 21 engaged on the face 14 of the plate 13 and coupled to the piston 20 by a ball joint.

The motor 7, 8 comprises a first hydraulic circuit (not shown), which extends through the hub 18, and has an outlet to supply a fluid under pressure to the cylinders 19 and an inlet to receive the fluid under pressure from the cylinders 19.

The thrust of the fluid under pressure on the pistons 20 causes sliding of the pistons 20 on the face 14 of the plate 13 and, consequently, rotation of the assembly defined by the shaft 9, 10 and by the rotor 17 around the axis 11.

The motor 7, 8 further comprises an operating device to move the plate 13 around the edge 16 between a maximum displacement position of the motor 7, 8 and a minimum displacement position of the motor 7, 8.

The device 22 comprises an actuator cylinder 23, which is obtained in the flange 12 on the opposite side of the edge 16 relative to the axis 11, has a longitudinal axis 24 substantially parallel to the axis 11, and is engaged in a sliding manner by the operating piston 25 facing, and in contact with, the plate 13.

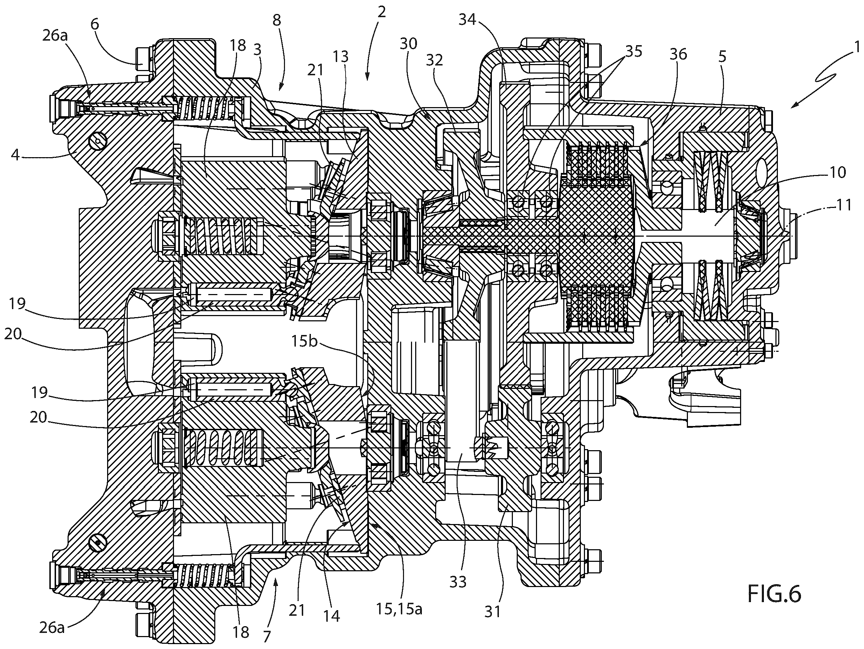

The device 22 is associated with a second hydraulic circuit 26 comprising, in turn, a valve device 26a (Fig. 6), which is accommodated in the lid 4, and is of the type described and shown in Italian patent application no. 102020000019477.

The hydraulic circuit 26 further comprises a first branch (not shown and of the type described and shown in Italian patent application no. 102020000019477) to supply a fluid under pressure to the valve device 26a, a second branch 27 to supply the fluid under pressure from the valve device 26a to the cylinder 23, and a third branch (not shown and of the type described and shown in Italian patent application no. 102020000019477) to remove the fluid under pressure from the cylinder 23 to a collection tank (not shown) through the valve device 26a.

The valve device 26a is configured to move between:
a first operating position, in which the branch 27 is connected to the first branch (not shown) and is separate from the third branch (not shown) in order to supply the fluid under pressure to the cylinder 23;
a second operating position, in which the branch 27 is connected to the third branch (not shown) and is separate from the first branch (not shown) in order to remove the fluid under pressure from the cylinder 23; and
a third operating position, in which the aforesaid first, second and third branch are connected to one another so as to supply the fluid under pressure to the cylinder 23 and, simultaneously, remove the fluid under pressure from the cylinder 23.

In the first operating position, the fluid under pressure is supplied to the cylinder 23 with a first supply pressure, and the piston 25 is operated to move the plate 13 to a minimum displacement position of the motor 7, 8.

In the second operating position, the fluid under pressure is removed from the cylinder 23 and the plate 13 is moved to a maximum displacement position of the motor 7, 8 under the thrust of the pistons 20.

In the third operating position, the fluid under pressure is supplied to the cylinder 23 with a second supply pressure, which is smaller than the first supply pressure, and the piston 25 is operated to move the plate 13 to an intermediate displacement position of the motor 7, 8 between the minimum displacement position and the maximum displacement position.

Naturally, the pressure of the fluid can be selectively controlled so as to continuously vary the displacement of the motor 7, 8.

The transmission assembly 1 further comprises an output shaft 28, which is mounted inside the body 2 so as to rotate around a rotation axis 29 parallel to the axes 11, protrudes axially on the outside of the body 2, and is configured to be connected, generally, to an axle (not shown) of the operating machine (not shown).

The transmission assembly 1 is further provided with a geared reduction unit accommodated on the inside of the body 2 to connect the shafts 9, 10, and 28 to one another.

The reduction unit 30 comprises a first gear 31 mounted on the shaft 9 of the motor 7, a second gear 32 mounted on the shaft 10 of the motor 8, and a third gear 33 mounted on the shaft 28 and coupled to the gear 32.

The reduction unit 30 further comprises a fourth gear 34, which is mounted on the shaft 10 of the motor 8 coaxially to the relative axis 11, is coupled to the shaft 10 in a rotary manner through the interposition of a pair of rolling bearings 35, and is further coupled to the gear 31.

The shaft 10 protrudes on the inside of the lid 5, and supports a clutch 36 configured to selectively control the operation of the transmission assembly 1 between a first gear, in which the gear 34 is angularly locked on the shaft 10 by the clutch 36 to couple the shafts 9, 10 and the motors 7, 8 to one another, so as to guarantee the operating machine (not shown) a relatively low supply speed and a relatively high traction, and a second gear, in which the gear 34 is coupled to the shaft 10 in a rotary manner and the shafts 9, 10 are decoupled from one another so as to guarantee the operating machine (not shown) a relatively high supply speed and a relatively low traction as the motor 7 does not contribute to the traction.

In the second gear, the shaft 9 of the motor 7 is angularly locked around the relative axis 11 either by arranging the face 14 of the plate 13 perpendicularly to the relative axis 11 so as to reset the displacement of the motor 7 to zero or through a braking device (not shown) acting on the shaft 9.

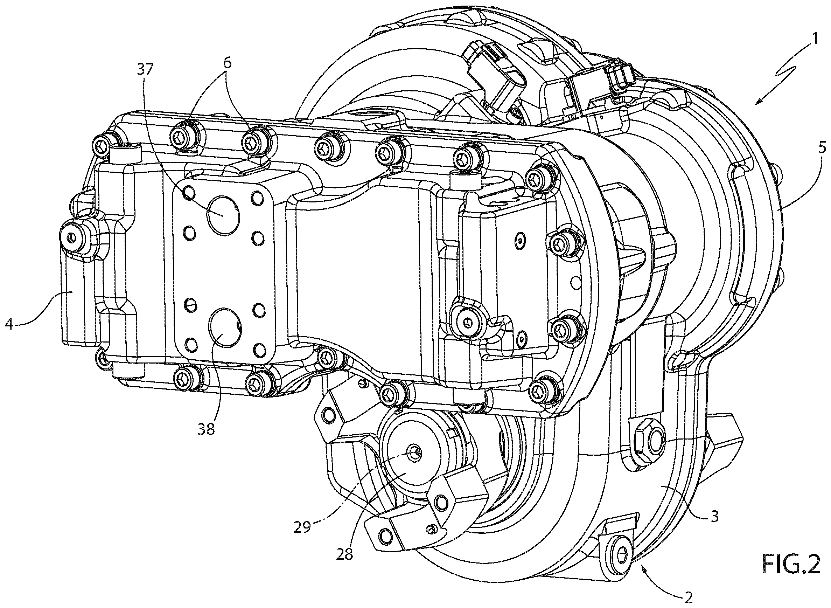

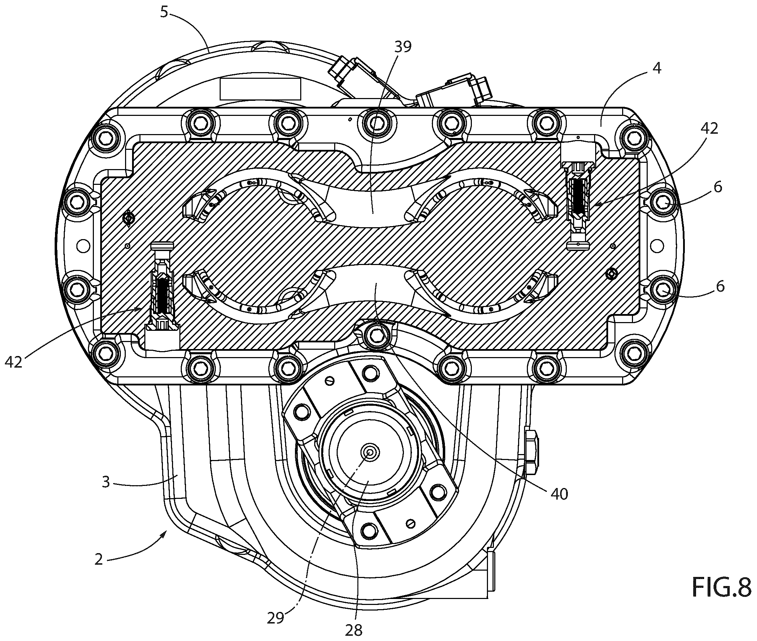

As shown in Figs. 2 and 8, the lid 4 is provided with a first duct 37 and with a second duct 38, and accommodates, on the inside, a first manifold 39 connected to the first duct 37 and communicating with the cylinders 23 of the motors 7, 8 and a second manifold 40 connected to the second duct 38 and communicating with the cylinders 23 of the motors 7, 8.

According to the direction of rotation of the output shaft 28 and, hence, of the forward direction of the operating machine (not shown), the first duct 37 selectively defines an inlet to let the fluid under pressure into the two motors 7, 8 or an outlet to let the fluid under pressure out of the two motors 7, 8, the second duct 38 selectively defines an inlet to let the fluid under pressure into the two motors 7, 8 or an outlet to let the fluid under pressure out of the two motors 7, 8, the first manifold 39 selectively defines an inlet manifold or an outlet manifold, and the second manifold 40 selectively defines an inlet manifold or an outlet manifold.

Supply of the fluid under pressure along the first branch (not shown) of the hydraulic circuit 26 of each motor 7, 8 is controlled by a relative supply valve 41, which is accommodated inside the lid 4, and is of the type described and shown in Italian patent application no. 102020000019477.

Finally, the lid 4 accommodates, on the inside, an auxiliary valve 42 for each motor 7, 8.

According to a variant, not shown, the lid 4 accommodates, on the inside, the first manifold 39 and the second manifold 40, and the element 3 is provided with the first duct 37 and with the second duct 38, and accommodates, on the inside, the valve devices 26a, the supply valves 41, and the auxiliary valves 42.

According to another variant, not shown, the element 3 is manufactured as two pieces connected to one another, one of them accommodating, on the inside, the hydraulic motors 7, 8 and the other one accommodating, on the inside, the geared reduction unit 30.

The transmission assembly 1 has some advantages, mainly deriving from the fact that the two hydraulic motors 7, 8 and the geared reduction unit are integral to one another and accommodated on the inside of the single box-shaped containing body 2 and that the valve devices 26a, the two ducts 37, 38, the two manifolds 39, 40, the supply valves 41, and the auxiliary valves 42 are integrated in the body 2.

Consequently, the transmission assembly 1 has relatively small dimensions and is suitable to be installed in operating machines (not shown) of relatively small and relatively compact dimensions.

## Claims

1. A transmission assembly with a double hydraulic motor for operating machines, the transmission assembly comprising a first hydraulic motor (7) provided with a first transmission shaft (9); a second hydraulic motor (8) provided with a second transmission shaft (10); an output shaft (28), which can be connected to an axle of an operating machine; a geared reduction unit (30) to connect the first transmission shaft (9), the second transmission shaft (10) and the output shaft (28) to one another; and a coupling device (36) to connect said first and second transmission shafts (9, 10) to one another in a releasable manner; and being **characterized in that** it further comprises one single box-shaped containing body (2) configured to accommodate, on the inside, said first and second hydraulic motors (7, 8), the output shaft (28), the geared reduction unit (30) and the coupling device (36).

2. The transmission assembly according to claim 1, wherein each hydraulic motor (7, 8) is a swashplate hydraulic motor.

3. The transmission assembly according to claim 2, wherein the transmission shaft (9, 10) of each swashplate hydraulic motor is mounted so as to rotate around a first rotation axis (11); each swashplate hydraulic motor further comprising a countering plate (13), which extends around the relative transmission shaft (9, 10), is delimited by a flat annular face (14) inclined at a variable angle other than 90° relative to the first rotation axis (11) and is mounted so as to rotate around a second rotation axis (16) transverse to the first rotation axis (11); a piston rotor (17) comprising, in turn, a central hub (18) angularly integral to the relative transmission shaft (9, 10), a plurality of guide cylinders (19) obtained through the central hub (18) parallel to the first rotation axis (11) and, for each guide cylinder (19), a respective piston (20), which is engaged in the guide cylinder (19) in a sliding manner and has a free end engaged on the annular face (14) of the countering plate (13); a first hydraulic circuit obtained through the central hub (18) and having an outlet to supply a fluid under pressure to the guide cylinders (19) and an inlet to receive the fluid under pressure from the guide cylinders (19); and an operating device (22) to move the countering plate (13) around the second rotation axis (16) between a minimum displacement position and a maximum displacement position of the swashplate hydraulic motor.

4. The transmission assembly according to claim 3, wherein the operating device (22) comprises an actuator cylinder (23) provided with an operating piston (25) to move the countering plate (13) from the maximum displacement position to the minimum displacement position and a second hydraulic circuit (26) to supply a fluid under pressure to the actuator cylinder (23); the second hydraulic circuit (26) comprising a valve device (26a), a first branch to supply the fluid under pressure to the valve device (26a), a second branch (27) to supply the fluid under pressure from the valve device (26a) to the actuator cylinder (23) and a third branch to remove the fluid under pressure from the actuator cylinder (23) and from the valve device (26a).

5. The transmission assembly according to claim 4, wherein the valve device (26a) is configured to move to a first operating position, in which the second branch (27) is connected to the first branch and is separate from the third branch in order to supply the fluid under pressure to the actuator cylinder (23) with a first supply pressure, a second operating position, in which the second branch (27) is connected to the third branch and is separate from the first branch, and at least one third operating position, in which said first and second branches are connected to one another so as to supply the fluid under pressure to the actuator cylinder (23) with a second supply pressure, which is smaller than the first supply pressure, and move the countering plate (13) to an intermediate displacement position of the swashplate hydraulic motor.

6. The transmission assembly according to any one of the preceding claims, wherein the coupling device (36) comprises a clutch mounted on at least one of said first and second transmission shafts (9, 10).

7. The transmission assembly according to any one of the preceding claims, wherein the geared reduction unit (30) comprises a first gear (31) integral to the first transmission shaft (9), a second gear (32) integral to the second transmission shaft (10) and a third gear (33) integral to the output shaft (28) and coupled to the second gear (32).

8. The transmission assembly according to claim 7, wherein the geared reduction unit (30) further comprises a fourth gear (34) coupled to the first gear (31) and coupled to the second transmission shaft (10) in a rotary manner; the coupling device (36) being configured to angularly lock the fourth gear (34) on the second transmission shaft (10).

9. The transmission assembly according to any one of the preceding claims, wherein the box-shaped containing body (2) comprises a tubular element (3) having two opposite open ends and two closing lids (4, 5) to close the open ends.

10. The transmission assembly according to claim 9, wherein the tubular element (3) is manufactured as one single piece or as two pieces connected to one another, one of them accommodating, on the inside, said first and second hydraulic motors (7, 8) and the other one accommodating, on the inside, the geared reduction unit (30).

11. The transmission assembly according to claim 9 or 10, wherein the box-shaped containing body (2) has an inner wall (12) obtained in an intermediate point of the tubular element (3) and engaged by the transmission shafts (9, 10) in a rotary manner.

12. The transmission assembly according to any one of the claims from 9 to 11, when they depend on claim 4 or 5, wherein a closing lid (4) accommodates the two valve devices (26a), an inlet (37; 38) to let the fluid under pressure into said first and second hydraulic motors (7, 8), an outlet (37; 38) to let the fluid under pressure out of said first and second hydraulic motors (7, 8), an inlet manifold (39; 40) connected to the inlet (37; 38) and communicating with the guide cylinders (19) of said first and second hydraulic motors (7, 8), an outlet manifold (39; 40) connected to the outlet (37; 38) and communicating with the guide cylinders (19) of said first and second hydraulic motors (7, 8), two supply valves (41) to selectively control the supply of fluid under pressure to the valve devices (26a) and, in particular, two auxiliary valve devices (42).

13. The transmission assembly according to any one of the claims from 9 to 11, when they depend on claim 4 or 5, wherein the tubular element (3) accommodates the two valve devices (26a), an inlet (37; 38) to let the fluid under pressure into said first and second hydraulic motors (7, 8), an outlet (37; 38) to let the fluid under pressure out of said first and second hydraulic motors (7, 8), two supply valves (41) to selectively control the supply of fluid under pressure to the valve devices (26a) and, in particular, two auxiliary valve devices (42), and wherein a closing lid (4) accommodates an inlet manifold (39; 40) connected to the inlet (37; 38) and communicating with the guide cylinders (19) of said first and second hydraulic motors (7, 8) and an outlet manifold (39; 40) connected to the outlet (37; 38) and communicating with the guide cylinders (19) of said first and second hydraulic motors (7, 8).
